# EUROPÄISCHE PATENTANMELDUNG

(11) **EP 3 034 691 A1**
(43) Veröffentlichungstag der Anmeldung: **22.06.2016**
(21) Anmeldenummer: 14002849.9
(22) Anmeldetag: 09.04.2008
(51) Int. Cl.: D21B 1/34

(54) **Pulper**

(30) Priorität: 18.04.2007 DE 102007018553; 22.08.2007 DE 102007039744
(62) Teilanmeldung aus: 08748733.6
(71) Anmelder: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus

(57) **Zusammenfassung**

Zum Trennen von Fasern aus einem im Gemenge wird ein Pulper vorgeschlagen, der ein Lochblech aufweist, das zumindest an seiner Oberseite beschichtet und/oder poliert ist. Die Glättung des Lochblechs, wie auch der übrigen stoffberührten Teile führt zu einem geringeren spezifischen Energiebedarf und zu einer deutlich höheren Faserstoffproduktion pro Zeit.

## Beschreibung

Die Erfindung betrifft einen Pulper zum Recyceln eines Gemenges, in dem zum Trennen von Fasern aus dem Gemenge ein Lochblech angeordnet ist.

Es gibt eine Vielzahl an Pulpern, die zur Aufbereitung eines Stoffgemenges verwendet werden. Ein weites Gebiet der Aufbereitung ist das Gebiet der Papierherstellung, bei dem aus Spuckstoff Fasern abgetrennt werden. Pulper werden jedoch auch zur Weiterverarbeitung landwirtschaftlicher Produkte eingesetzt. Weitere wichtige Anwendungsgebiete für derartige Pulper sind die Behandlung von faserhaltigen Stoffen aus Sperrmüll, Gewerbemüll, dem "Dualen System" und der "trockenen Tonne".

Hierbei unterscheidet man kontinuierlich und diskontinuierlich arbeitende Pulper. Bei diskontinuierlich arbeitenden Pulpern wird das Produkt in den Pulper gefüllt, über eine längere Zeit im Pulper bearbeitet und anschließend wird der Pulper entleert.

Bei kontinuierlich arbeitenden Pulpern wird während der Bearbeitung eine Stofffraktion abgetrennt und aus dem Pulper entnommen.

Insbesondere für kontinuierlich arbeitende Pulper werden Pulper verwendet, in denen ein Lochblech angeordnet ist. Derartige Lochbleche haben Löcher von einem Durchmesser von einem bis mehreren Zentimetern, um Spuckstoffe, wie insbesondere Kunststoffe, von Faserstoffen abzutrennen. Nach der Bearbeitung der Stoffe im Pulper folgt dann eine Weiterbearbeitung der abgetrennten Begleitstoffe, insbesondere durch Sortierverfahren und die Weiterbearbeitung der abgetrennten Faserstoffe.

Der Erfindung liegt die Aufgabe zu Grunde, einen gattungsgemäßen Pulper weiter zu entwickeln, sodass der spezifische Energiebedarf verringert und die Faserstoffproduktion beschleunigt wird.

Diese Aufgabe wird mit einem Pulper gelöst, bei dem das Lochblech zumindest an seiner Oberseite beschichtet und/oder poliert ist.

Dies führt zu einer Verschleißverminderung. Es hat sich darüber hinaus herausgestellt, dass die Glättung des Lochblechs, wie auch der übrigen stoffberührten Teile führt zu einem geringeren spezifischen Energiebedarf und zu einer deutlich höheren Faserstoffproduktion pro Zeit führt.

Eine besonders reibungsarme innere Oberfläche des Pulpers wird durch eine Beschichtung der Pulperinnenseite und/oder der Schraube erzielt. Hierzu eignen sich Nanomaterialien, die eine besonders reibungsarme Oberfläche z.B. durch den Lotuseffekt ermöglichen.

Vorteilhaft ist es, wenn der Pulper an seiner Innenseite und/oder eine Schraube im Pulper abgerundete und polierte Übergänge aufweist. Dadurch kann der spezifische Energiebedarf des Pulpers verringert werden, da die Reibungsverluste minimiert werden.

Vorteilhaft ist es, wenn das Lochblech Löcher mit einer Fläche von der Größe einer Kreisfläche von weniger als 5 mm Durchmesser aufweist.

Die starke Verringerung des Durchmessers der Löcher bzw. deren Durchgangsfläche führt dazu, dass bereits im Pulper eine bessere Fraktionierung stattfindet und die Nachbearbeitung verringert wird.

Erfreulicherweise hat sich herausgestellt, dass entgegen allen technischen Erwartungen der Durchmesser der Löcher stark reduziert werden kann, ohne dass durch eine Verstopfung der Löcher das gesamte System zum Stillstand kommt.

Als vorteilhaft hat es sich erwiesen, ein Lochblech mit Löchern zu verwenden, bei dem die Löcher eine Fläche von der Größe einer Kreisfläche von 0,1 bis 2 mm Durchmesser aufweisen. Versuche haben sogar gezeigt, dass positive Ergebnisse mit Löchern im Lochblech mit einer Fläche von der Größe einer Kreisfläche von weniger als 1,5 mm erzielt wurden. Insbesondere dieser extrem kleine Lochdurchmesser, wie beispielsweise bei Löchern mit einem Durchmesser von etwa 1 mm, führt beispielsweise bei der Spuckstoffaufbereitung zu einem hervorragenden Rohfaserstoff, der anschließend im Wesentlichen nur noch eingedickt werden muss, um weiter verwendet werden zu können.

In der Praxis werden derartige Pulper mit relativ viel Wasser zum Herausspülen der Faserstoffe betrieben. Um gute Ergebnisse zu erzielen wird mit einer hohen Gesamtstoffdichte gearbeitet. Zur Verwendung derartiger Pulper wird auf die WO2006/122538 A2 verwiesen, in der unterschiedliche Verfahren zum Betreiben eines Pulpers beschrieben sind, die auch für den erfindungsgemäßen Pulper vorteilhaft sind.

Gute Erfahrungen mit einem derartigen Pulper wurden auch in Verbindung mit dem Aufschlagen von Biomasse, wie Kartoffeln oder Gras, aber auch Biomasse in Restmüll erzielt.

Es hat sich weiterhin als vorteilhaft herausgestellt, wenn das Lochblech zwischen den Löchern einen Abstand von weniger als 5 mm aufweist. Vorteilhaft ist zwischen den Löchern sogar ein Abstand von 0,2 bis 2 mm und in der Praxis hat sich ein Abstand von weniger als 1,5 mm als tauglich erwiesen.

Beispielsweise bei einem Einsatz als Schlitzsortierer können minimierte Stegbreiten mit Abmessungen von unter 1 mm verwendet werden. Ziel ist ein maximierter Stofffluss bei kleinen Abmessungen der Stege. Dies erschließt einen Einsatz als Entstipper, Lochsortierer, Schlitzsortierer, Faserfraktionator (lang/kurz oder braunsteif/weiß-weich), Disperger oder Deinker (ggf. unter Einsatz von Chemikalien). Das Einbringen von Mahlwerkzeugen für die Mahlfunktion in den Pulper ermöglicht den Einsatz als Mühle mit kontinuierlicher Feinstoffabtrennung durch das Lochblech, das auch als Schlitzblech ausgebildet sein kann.

Durch den geringen Abstand zwischen den Löchern wird die freie Durchgangsfläche im Lochblech erhöht. Das Lochblech wird zwar filigraner in der Ausbildung. Es ist jedoch technisch unproblematisch, derartige Lochbleche herzustellen und in einem Pulper einzubauen und zu betreiben.

In einem derartigen Pulper laufen verschiedene Umwälzprozesse ab, die zu einer Mischung des eingebrachten Gemenges oberhalb des Lochbleches sorgen. Es hat sich herausgestellt, dass besonders gute Ergebnisse mit einer externen Umwälzung erzielt wurden. Hierzu wird oberhalb des Lochblechs eine Entnahmeeinrichtung angeordnet, die mit einer Sammeleinrichtung verbunden ist, die mit einer Eintragsöffnung des Pulpers in Verbindung steht.

Die Entnahme oberhalb des Lochblechs ermöglicht es, Gemenge aus dem System Pulper zu entziehen, die Sammeleinrichtung ermöglicht es, Material hinzu zu geben oder Material abzuziehen und die Verbindung mit der Eintragsöffnung des Pulpers ermöglicht es, das gesamte entnommene Gemengevolumen oder nur einen Teil davon, gegebenenfalls unter Zumischung neuen Materials, in den Pulper einzubringen. Hierdurch wird mit einfachen Mitteln eine beliebig variierbare und steuerbare externe Rückführung erzielt.

Besonders vorteilhaft ist es, wenn die Sammeleinrichtung für einen Betrieb nach dem "First In First Out"-Prinzip ausgebildet ist. Die Sammeleinrichtung kann dadurch ein gewisses Volumen speichern und auch als Puffer dienen.

Um innerhalb der Sammeleinrichtung das "First In First Out"-Prinzip auf einfache Art und Weise durchführen zu können, wird vorgeschlagen, dass die Sammeleinrichtung eine Fördereinrichtung aufweist. Dies ermöglicht es, die Materialien des Gemenges innerhalb der Sammeleinrichtung aktiv zu bewegen. Eine Alternative hierzu wäre beispielsweise eine Sammeleinrichtung in Form eines vertikal stehenden Silos, mit dem ebenso ein "First In First Out"-Prinzip durchgeführt werden kann.

Vorteilhaft ist es, wenn die Sammeleinrichtung einen weiteren Zulauf für Gemenge aufweist. Dies ermöglicht es einerseits neues Gemenge in dem Sammler vorzuhalten und andererseits Gemenge aus dem Pulper in den Sammler einzuführen. Vorteilhaft ist es, wenn das neue Gemenge im Sammler nach dem "First In First Out"-Prinzip gesammelt und an den Pulper abgegeben wird. Außerdem ist es vorteilhaft, wenn das aus dem Pulper stammende Gemenge im Sammler gesammelt werden kann und nach dem "First In First Out"-Prinzip dem Pulper wieder zugeführt wird.

Der Sammler hat einen ersten Ablauf für Gemenge, der mit der Eintragsöffnung des Pulpers in Verbindung steht. Vorzugsweise weist er einen weiteren Ablauf für seine Entleerung auf.

Es hat sich herausgestellt, dass ein gewisser Druck auf dem Lochblech, insbesondere bei den kleinen Lochdurchmessern, von besonderer Bedeutung ist. Daher wird vorgeschlagen, dass der Pulper über dem Lochblech eine Höhe von über 2 m aufweist. Der Druck auf das Lochblech kann beispielsweise über eine Schraube realisiert werden. Gerade die Höhe des Gemengespiegels oberhalb des Lochblechs hat jedoch eine besondere Bedeutung für einen homogenen Druck auf die Lochblechoberfläche, um auf der gesamten Lochblechoberfläche das Passieren von Rohfaserstoff zu erleichtern.

Vorteilhafterweise die Förderung innerhalb des Pulpers durch eine interne Fördereinrichtung unterstützt. Diese sollte über dem Lochblech eine Höhe von über 80 % der Pulperhöhe aufweisen. Eine derartige Fördereinrichtung kann eine Förderschraube sein. Hierfür sind jedoch auch Pumpen oder andere, beispielsweise in einem Rohr angebrachte Fördereinrichtungen, zu verwenden. Vorteilhaft ist es, wenn eine derartige Fördereinrichtung eine Höhe von über 80 % der Gemengehöhe über dem Lochblech aufweist. Hierbei wird von der üblichen Befüllhöhe des Pulpers mit dem Gemenge ausgegangen.

Für den Fall, dass die Fördereinrichtung eine senkrechte Schraube aufweist, wird vorgeschlagen, dass diese oben und unten gelagert ist. Dies erlaubt es, eine besonders lange Schraube zu verwenden und diese stabil zu führen.

Eine optimale Abstimmung von Pulper und Schraube wird erzielt, indem eine Schraube verwendet wird, deren Hüllkurve oberhalb einer über dem Lochblech angeordneten Entnahmeeinrichtung leicht konisch zur Pulperwandung verläuft. Zwischen Schraube und Pulperwandung muss ein Spalt bleiben, um die Schraube relativ zur Wandung zu bewegen. Durch die konische Ausbildung des Spaltes zwischen der Hüllkurve der Schraube und der Wandung des Pulpers, entsteht ein definierter Spalt zwischen Schraube und Pulperwandung, dessen sich reduzierende Breite das aufströmende Gemenge zur Schraube drängt und somit die Strömungsbedingungen innerhalb des Pulpers beeinflusst. Dies erlaubt es, insbesondere oberhalb des Entnahmebereichs, die Schraube überwiegend zur Förderung zu verwenden, während sie im unteren Bereich ihre Mahlfunktion übernimmt.

Die Schraube hat in ihrem unteren Bereich eine Spirale, die einen größeren Durchmesser als der obere Bereich der Schraube aufweist und deren Hüllkurve etwa der Form der Pulperwandung in diesem Bereich nachgeführt ist. Dadurch ergibt sich ein Pulper mit einer im oberen Bereich konischen und im unteren Bereich weiter ausladenden Formgebung.

Insbesondere zum Aufschluss von Stärke, sonstiger Biomasse, Textilien usw. wird in einer bevorzugten Ausführungsform vorgesehen, dass im Pulper umlaufende Messer angeordnet sind. Diese umlaufenden Messer können in einem unteren Bereich einer Spirale angeordnet sein. Hierzu wird vorgeschlagen, eine Spirale an ihrem unteren Ende zu bemessern oder eine Spirale durch Messer zu ersetzen.

Versuche haben gezeigt, dass es vorteilhaft ist, wenn der Pulper über dem Lochblech mehrere Entnahmeeinrichtungen aufweist. Dies ermöglicht es, oberhalb des Lochbleches einheitlichere Strömungsbedingungen zu erzielen.

Daher wird weiterbildend vorgeschlagen, dass die Entnahmeeinrichtungen am Umfang des Pulpers gleich verteilt angeordnet sind. Dadurch können einheitlichere Strömungsbedingungen auf der Oberfläche des Lochblechs erzielt werden.

Je nach Höhe über dem Lochblech stellen sich im Gemenge im Pulper unterschiedliche Dichten und Zusammensetzungen ein. Es wird daher vorgeschlagen, dass der Pulper Entnahmeeinrichtungen aufweist, deren Entnahmestellen in unterschiedlichen Höhen liegen. Dadurch können auf einfache Art und Weise unterschiedliche Fraktionen aus dem Pulper entnommen werden.

Beispielsweise können im oberen Bereich des Pulpers Stoffen entnommen werden, die leichter sind als das aufzuschließende Medium. Dies ist insbesondere Wasser. Es können aber auch andere Aufschlussmittel wie z.B. Alkohol oder Salzlösungen sein. Im unteren Bereich des Pulpers können Stoffe ausgetragen werden, die schwerer als das Aufschlussmittel sind.

Je nach Winkelstellung der Entnahmeeinrichtung wird eine mehr oder weniger flüssige Fraktion aus dem Pulper entnommen. Daher wird vorgeschlagen, dass der Pulper Entnahmeeinrichtungen mit in unterschiedlichen Winkeln zur Horizontalen angeordneten Wendeln aufweist. Eine nach unten führende Entnahmeeinrichtung entnimmt dem Pulper eine feuchtere Fraktion als eine nach oben führende Entnahmeeinrichtung.

Ein spezielles Ausführungsbeispiel sieht daher vor, dass die Ausrichtung der Entnahmeeinrichtung in ihrer Winkellage zur Horizontalen einstellbar ist.

Beispielsweise kann ein Austragssystem für Stoffe, die schwerer sind als das Aufschlussmedium im unteren Bereich des Pulpers oberhalb des Lochbleches in einer Winkellage schräg nach oben halbtrocken oder tropfnass diese Stoffe aus dem Pulper entnehmen. Ein Austragssystem für Stoffe, die schwerer sind als das Aufschlussmedium, und für die Austrag von Schwerstoffen, wie Metalle Steine usw., kann im unteren Bereich des Pulpers oberhalb des Lochbleches schräg nach unten diese Stoffe nass austragen. Ein senkrecht oder fast senkrecht nach unten angeordnetes Austragssystem kann dem alleinigen Austrag von Schwerstoffen dienen und ist im Falle einer halbkontinuierlichen Fahrweise des Pulpers auch zur Pulperentleerung nutzbar.

Insbesondere in Falle einer halbkontinuierlichen Fahrweise wird vorgeschlagen, dass der Pulper einen Pulperaufsatz zur Suspensionsverdünnung aufweist.

Um einen sicheren Einzug von Gemenge und eine sichere Zufuhr des Gemenges zur Reaktionszone zu gewährleisten, wird vorgeschlagen, dass der Pulper eine weitere Schraube zum Einzug des Gemenges aufweist. Diese weitere Schraube ist vorzugsweise in einem Aufsatz angeordnet.

Eine stark segmentierte Ausbildung des Lochblechs vermeidet einen Wärmeverzug. Daher wird vorgeschlagen, dass das Lochblech mehrere Lochplattenaufweist. Vorteilhaft sind je nach Pulpergröße mindestens eine Platte pro Quadratmeter Lochblech, vorzugsweise 10, insbesondere 100.

Eine einfache Vormontage wird erzielt, indem die Lochplatten in Lochträgerplatten montiert sind. Dies erlaubt es, die Lochplatten als Montagesystem bereit zu stellen.Um das Gemenge mit Messern zu zerkleinern, wir vorgeschlagen, dass der Pulper eine vorgeschaltete Schneideinrichtung aufweist. Vorteilhaft ist hierbei ein Scherenschnitt z.B. mit einer Guillotine. Als Größe für die geschnittenen Schnipsel wir eine Größe unter 50 mal 50 mm wie beispielsweise etwa 30 mal 30 mm vorgeschlagen.Um auf der Oberfläche der Suspension einen Druck aufzubauen, wird vorgeschlagen, dass der Pulper einen gasdicht gekapselten Einlauf aufweist. Dies ermöglicht es, auf der Suspension ein Überdruckpolster aufzubauen und dadurch die Suspension unter Druck durch das Lochblech zu drücken.

Der Fluss durch das Lochblech kann auch dadurch erhöht werden, dass der Pulper unter dem Lochblech eine Unterdruckeinrichtung aufweist. Dies ermöglicht es, die Suspension aus dem Pulper abzusaugen. Hierbei ist bevorzugt ein Überdruck oder ein Unterdruck von mehr als 0,3 bar einzustellen.

Kumulativ oder alternativ ist vorgesehen, dass der Durchmesser des Lochblechs größer ist als die Höhe des Pulpers. Vorteilhaft ist es, wenn der Durchmesser mehr als 1,5 vorzugsweise mehr als 2 mal so groß ist wie die Höhe des Pulpers. Das deutlich erhöhte Durchmesser-zu-Höhe-Verhältnis erhöht auch bei begrenzten Drücken den Durchfluss, ohne die Trennschärfe zu verringern.

Ein Ausführungsbeispiel eines erfindungsgemäßen Pulpers ist in der Figur dargestellt und wird im Folgenden näher erläutert.

Es zeigt,
- Figur 1: schematisch einen Schnitt durch einen Pulper und dessen Einbindung in die Materialströme
- Figur 2: schematisch einen Schnitt durch einen Pulper mit zwei übereinander angeordneten Entnahmeeinrichtungen,
- Figur 3: schematisch einen Schnitt durch einen Pulper mit zwei abgewinkelt zueinander angeordneten Entnahmeeinrichtungen,
- Figur 4: schematisch einen Schnitt durch einen Pulper mit Pulperaufsatz und Mahleinrichtung und
- Figur 5: schematisch einen Schnitt durch einen Pulper mit rotierenden Füllkörpern.

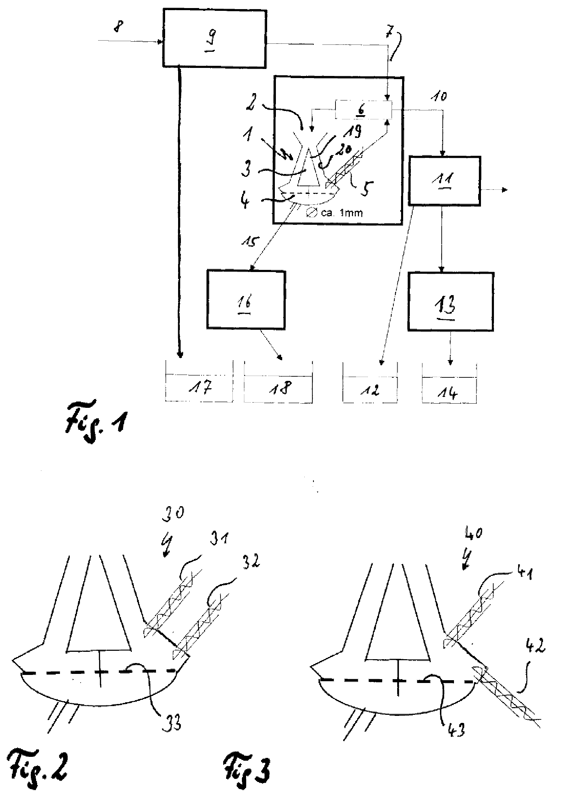

Der in der Figur 1 gezeigte Pulper 1 hat eine Eintragsöffnung 2, eine als Fördereinrichtung 3 dienende Schraube und unterhalb der Schraube ein Lochblech 4. Dieses Lochblech 4 hat runde Löcher mit einem Durchmesser von etwa 1 mm. An Stelle von runden Löchern, können auch Löcher mit anderen Geometrien vorgesehen werden. In diesem Fall haben die Löcher entsprechend freie Durchgangsflächen. Relevant können auch Schlitze sein.

Oberhalb des Lochblechs ist im unteren Bereich des Pulpers 1 eine Entnahmeeinrichtung 5 vorgesehen, die es ermöglicht Gemenge aus dem Bereich oberhalb des Lochblechs 4, beispielsweise mittels einer Schraube, zu einer Sammeleinrichtung 6 zu fördern. Diese Sammeleinrichtung 6 arbeitet nach dem "First In First Out"-Prinzip. Daher ist im hinteren Bereich der Sammeleinrichtung 6 die Verbindung mit der Entnahmeeinrichtung 5 gezeichnet, während am gegenüber liegenden Ende die Sammeleinrichtung 6 mit der Eintragsöffnung 2 des Pulpers 1 in Verbindung steht.

Zur Sammeleinrichtung 6 führt ein weiterer Zulauf 7, mit dem beispielsweise Spuckstoffe oder auch andere, insbesondere Fasern enthaltende Gemenge 8, dem Sammler zugeführt werden. In einer Vorbehandlung 9 kann beispielsweise eine Entzerrung und Zerkleinerung auf ca. 30 x 30 mm erfolgen. Außerdem können hier Metalle und Sande 17 bereits entfernt werden, damit diese nicht in den Pulper gelangen.

Der Sammler hat eine Entleerungseinrichtung 10, um die Rückstände einer PVC- und Polyolefin-Abtrennung 11 zuzuführen. Der Rest gelangt als Schwerstoff beispielsweise in einen Sammelbehälter für Ersatzbrennstoffe 12. Eine andere Fraktion wird als Polyolefine zunächst einer Trocknung und Kompaktierung 13 zugeführt und dann als Polyolefine 14 gesammelt.

Unterhalb des Lochblechs 4 wird aus dem Pulper 1 Faserdünnstoff 15 abgezweigt. Dieser Faserdünnstoff wird einer Eindickung 16 zugeführt. Nach dieser Eindickung liegt der Faserstoff in Form von Maschinenstoff 18 vor.

Erfreulicherweise hat sich bei der Behandlung von Spuckstoffen gezeigt, dass im Pulper härtere Bestandteile, wie beispielsweise Kunststoffe, am Boden kratzen und auch die extrem kleinen Löcher des Bodens nicht verstopfen, sondern immer wieder freilegen. Eine gute Förderung im Pulper wird mit der Schraube 3 erzielt, deren Hüllkurve 19 oberhalb der über dem Lochblech 4 angeordneten Entnahmeeinrichtung 5 etwa parallel zur Pulperwandung 20 und vorzugsweise nach oben in einem konisch zusammenlaufenden Spalt zwischen Hüllkurve 19 der Schraube 3 und Pulperwandung 20 verläuft. Zwischen der Hüllkurve 19 und der Pulperwandung 20 besteht somit ein Spalt, der je nach Pulperausführung unterschiedlich breit ausgebildet sein kann und eine Zuführung von nach oben kommendem Material zur Schraube bewirkt.

Die Figur 1 zeigt nur ein mögliches Ausführungsbeispiel. Der Fachmann erkennt, dass es hierzu unzählige Variationen gibt. Beispielsweise für Altpapier können aus dem ersten Pulper Gemengestoffe entnommen werden und einem zweiten Pulper zugeführt werden. Im vorliegenden Fall kann hierzu die Entnahmeeinrichtung 5 oder ein Auslass am Sammler 6 dienen.

Die Figur 2 zeigt einen Pulper 30 mit zwei Entnahmeeinrichtungen 31 und 32, deren Entnahmestellen in unterschiedlichen Höhen oberhalb des Lochblechs 33 angeordnet sind. Dadurch können mit den Entnahmeeinrichtungen 31, 32 verschiedene Fraktionen aus dem Pulper 30 entnommen werden.

Der in Figur 3 gezeigte Pulper 40 hat zwei Entnahmeeinrichtungen 41, 42, die ebenso oberhalb des Lochblechs 43 angeordnet sind. Während die Entnahmeeinrichtung 41 durch ihre nach oben führende Ausrichtung und durch ihre relativ hoch oberhalb des Lochblechs 43 angeordnete Entnahmestelle eine spezielle Fraktion aus dem Pulper mit möglichst geringer Feuchte entzieht, entnimmt die Entnahmeeinrichtung 42 mit ihrer Anordnung relativ nahe am Lochblech 43 und ihrer nach unten führenden Ausrichtung eine Fraktion mit einer höheren Feuchtigkeit.

Dies sind nur prinzipielle Darstellungen, wie auf die zu entnehmenden Fraktionen durch die Position und Anordnung der Entnahmeeinrichtung eingewirkt werden kann. Die Anordnung der Entnahmeeinrichtungen ist auch unabhängig von den zuvor beschriebenen Merkmalen der Erfindung erfindungswesentlich.

In den Figuren nicht gezeigt, ist eine Entnahmeeinrichtung, deren Winkellage relativ zur Horizontalen verstellbar ist, um je nach Anforderung Gemenge mit mehr oder weniger Flüssigkeit dem Pulper zu entnehmen.

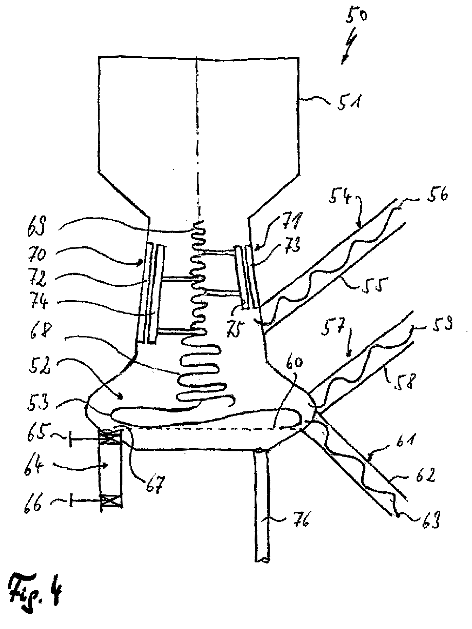

Der in Figur 4 gezeigte Pulper 50 hat einen Pulperaufsatz 51, um eine Suspensionsverdünnung im Falle einer halbkontinuierlichen Fahrweise zu ermöglichen. Dieser Pulper 50 ist für den Eintrag faserhaltiger Stoffe aus Sperrmüll, dem dualen System sowie der trockenen Tonne geeignet. Hierzu weist die untere Spirale 52 eine Bemesserung 53 auf. Alternativ kann die untere Spirale auch durch umlaufende Messer ersetzt werden, um Stärke, Biomasse, Textilien usw. aufzuschließen. Das Austragssystem 54 ist ein Rohr 55 mit einer Schraube 56. Es dient dazu, Stoffe im oberen Teil des Pulpers, die leichter sind als das im Pulper verwendete Medium, auszutragen. Diese Medien sind insbesondere Wasser oder andere Aufschlussmittel wie Alkohol oder Salzlösungen.

Das darunter liegende Austragssystem 57 besteht wiederum aus einem Rohr 58 und einer Schraube 59. Dieses tiefer liegende, aber schräg nach oben geführte Austragssystem 57 dient dem Austragen von Stoffen, die schwerer sind als das im Pulper verwendete Medium.

Darüber hinaus ist oberhalb des Lochblechs 60 ein weiteres Austragssystem 61 aus einem Rohr 62 und einer Schraube 63 angeordnet, das schräg nach unten führt und dadurch dem Austrag von Schwerststoffen wie Metallen, Leder, Textilien, schweren Kunststoffen und Steinen dient, die nass ausgetragen werden.

Das Austragssystem 64 mit den Schiebern 65 und 66 führt senkrecht nach unten und dient dem Austragen von Schwerststoffen. Hierzu ist oberhalb des Schiebers 65 im Lochblech 60 eine größere Öffnung 67 zum Austragen von Schwerststoffen vorgesehen. Gleichzeitig ist dieses Austragssystem 64 auch zur Pulperentleerung im Falle der halbkontinuierlichen Fahrweise nutzbar.

Neben der Schraube 52, die auch bemessert sein kann, weist der Pulper 50 oberhalb der Hauptschraube 68 eine weitere Schraube 69 zum sicheren Einzug von Material und zur Zufuhr des selben zur Reaktionszone auf. Am Rand des Pulpers 50 sind viele Mahleinrichtungen 70 und 71 angeordnet. Diese Mahleinrichtung bestehen jeweils aus einer stationären Mahlplatte 72, 73 und einer koaxial zum Pulper drehbar angeordneten Mahlplatte 74 bis 75. Neues Bild für das Defibrillieren und Kürzen von Papierfasern.

Der Pulper ermöglicht es somit über die Schraube 69 Material in den Pulper zu fördern, mit der Schraube 68 Material im Pulper umzuwälzen und mit der Schraube 53 Material im Pulper zu zerkleinern. Während die zentral angeordneten Schrauben eine Materialbewegung nach unten bedingen, wandert Material an den Wandungen des Pulpers nach oben und passiert dabei die Mahleinrichtungen 70 und 71. Dadurch entsteht eine optimale Behandlung verschiedenartigster Materialien, die zerkleinert oder aufgeschlossen werden sollen. Das zerkleinerte Material verlässt über das Lochblech 60 und den Abfluss 76 den Pulper.

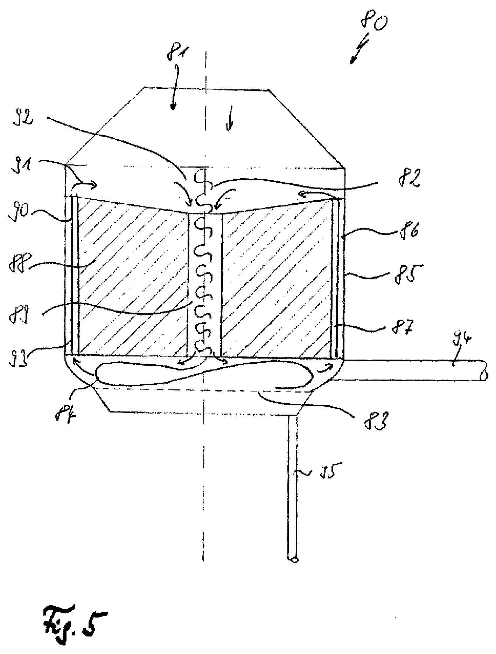

Einen ähnlichen Aufbau hat der in Figur 5 gezeigter Pulper 80. Bei diesem Pulper gelangt am oberen Ende 81 eine gegebenenfalls geschnittene aber ungemahlene Faserstoffsuspension in den Pulper. Im Zentrum des Pulpers wird die Faserstoffsuspension durch die Schraube 82 nach unten gefördert und dort oberhalb eines Lochblechs 83 mit der Schraube 84 umgewälzt.

An den radial außen liegenden Wänden 85 sind radial nach innen vorstehende Statorleisten 86 angeordnet, die etwa 2 bis 3 mm breit sind und beabstandet zueinander am Umfang des Pulpers 80 an der Wandung 85 radial nach innen weisend angeordnet sind. Den Statorleisten 86 gegen-überliegend sind Rotorleisten 87 an einem Füllkörper 88 angeordnet, der eine mittlere Bohrung 89 aufweist und koaxial zum Pulper 80 drehbeweglich gelagert ist.

Die Statorleisten 86 und die gegenüberliegend am Umfang des Füllkörpers 88 in regelmäßigen Abständen radial nach außen weisenden Rotorleisten 87 bilden - sofern die Leisten sich auf einer radialen Linie gegenüber liegen - einen Spalt von 0,05 bis 1 mm, der je nach Faserstoffsuspension eingestellt werden kann. Dieser Spalt dient als Mahlzone 90, in dem die Fasern gequetscht und gebürstet werden, während sie am äußeren Rand des Pulpers 80 von unten nach oben wandern.

Die derart behandelten Fasern gelangen wieder in den oberen Bereich des Pulpers, wo sie von der Schraube 82 wieder in den unteren Bereich gefördert werden.

Im unteren Bereich des Pulpers wird über das Lochblech 83 von der gemahlenen Faserstoffsuspension eine Feinstoffsuspension abgezogen. Durch das kontinuierliche Abziehen der Feinstoffsuspension am unteren Ende des Pulpers durch das Lochblech 83 werden die den Mahlprozess behindernden Feinstoffe entfernt, sodass ein optimaler Mahlprozess erzielt wird.

Das Lochblech 83 hat relativ kleine Bohrungen und relativ große Stegbreiten, um Verstopfungen zu vermeiden. Die Stege sind dabei so breit zu wählen, dass Verspinnungen von Loch zu Loch oder von Spalt zu Spalt vermieden werden. Hierzu sind die Stege mehrere Millimeter breit.

Zusätzlich oder alternativ kann auch ein bekannter Abstreifer verwendet werden, der über das Lochblech geführt wird, um ein Verstopfen der Bohrungen zu vermeiden.

Die eingezeichneten Pfeile 91 zeigen, wie die Füllkörper 80 den Pulper in eine mittlere Zone 92 und eine Randzone 93 aufteilen. Während das Material in der mittleren Zone 92 nach unten gefördert wird, wandert es in der Randzone 93 nach oben. Durch den kontinuierlichen Abzug der Feinstoffsuspension wird in der Randzone eine gute Vermahlung erzielt, ohne dass die Feinstoffe den Mahlprozess behindern würden.

Oberhalb des Lochblechs 83 ist ein Faserstoffabfluss 94 vorgesehen und unterhalb des Lochblechs 83 ist ein Feinstoffsuspensionsabfluss 95 angeordnet. Zusätzlich können weitere Abflüsse, wie sie in den zuvor beschriebenen Figuren dargestellt sind, vorgesehen werden.

Die Abmessungen des mittleren Bereichs 92 und des Randbereichs 93 sind so zu wählen, dass ein unbehinderter Fluss der Faserstoffsuspension entsteht und die Suspension mit minimalem Energieaufwand im Pulper umgewälzt werden kann.

## Patentansprüche

1. Pulper zum Recyceln eines Gemenges, in dem zum Trennen von Fasern aus dem Gemenge ein Lochblech angeordnet ist, ***dadurch gekennzeichnet, dass*** das Lochblech zumindest an seiner Oberseite beschichtet und/oder poliert ist.

2. Pulper nach Anspruch 1, ***dadurch gekennzeichnet, dass*** er an seiner Innenseite abgerundete und polierte Übergänge aufweist.

3. Pulper nach einem der vorhergehenden Ansprüche, ***dadurch gekennzeichnet, dass*** die Pulperinnenseite beschichtet ist.

4. Pulper nach einem der vorhergehenden Ansprüche, ***dadurch gekennzeichnet, dass*** er eine Schraube mit abgerundeten und polierten Übergängen aufweist.

5. Pulper nach einem der vorhergehenden Ansprüche, ***dadurch gekennzeichnet, dass*** die Schraube beschichtet ist.

6. Pulper nach einem der vorhergehenden Ansprüche, ***dadurch gekennzeichnet, dass*** er eine weitere Schraube zum Einzug des Gemenges aufweist.

7. Pulper nach einem der vorhergehenden Ansprüche, ***dadurch gekennzeichnet, dass*** das Lochblech Löcher mit einer Fläche von der Größe einer Kreisfläche von weniger als 5 mm Durchmesser aufweist.

8. Pulper nach einem der vorhergehenden Ansprüche, ***dadurch gekennzeichnet, dass*** das Lochblech Löcher mit einer Fläche von der Größe einer Kreisfläche von 0,1 bis 2,0 mm Durchmesser aufweist.

9. Pulper nach einem der vorhergehenden Ansprüche, ***dadurch gekennzeichnet, dass*** das Lochblech Löcher mit einer Fläche von der Größe einer Kreisfläche von weniger als 1,5 mm aufweist.

10. Pulper nach einem der vorhergehenden Ansprüche, ***dadurch gekennzeichnet, dass*** das Lochblech zwischen den Löchern einen Abstand von weniger als 5 mm aufweist.

11. Pulper nach einem der vorhergehenden Ansprüche, ***dadurch gekennzeichnet, dass*** das Lochblech zwischen den Löchern einen Abstand von 0,2 bis 2,0 mm aufweist.

12. Pulper nach einem der vorhergehenden Ansprüche, ***dadurch gekennzeichnet, dass*** das Lochblech zwischen den Löchern einen Abstand von weniger als 1,5 mm aufweist.

13. Pulper nach einem der vorhergehenden Ansprüche, ***dadurch gekennzeichnet, dass*** das Lochblech Schlitze mit einer Breite von 0,05 bis 0,2 mm und vorzugsweise von ca. 0,1 mm aufweist.
